# EUROPÄISCHE PATENTSCHRIFT

(11) **EP 1 124 908 B1**
(45) Veröffentlichungstag und Bekanntmachung des Hinweises auf die Patenterteilung: **27.11.2002**
(21) Anmeldenummer: 99948899.2
(22) Anmeldetag: 29.09.1999
(51) Int. Cl.: C09D 11/00, C09B 67/00, C08J 3/215, D06P 1/44

(54) **FARBSTOFFHALTIGE POLYMERPARTIKEL**
POLYMER PARTICLES CONTAINING DYE
PARTICULES POLYMERES CONTENANT DES COLORANTS

(30) Priorität: 30.09.1998 DE 19845078
(43) Veröffentlichungstag der Anmeldung: 22.08.2001
(73) Patentinhaber: BASF AKTIENGESELLSCHAFT, 67056 Ludwigshafen (DE)
(72) Erfinder: AUWETER, Helmut, D-67117 Limburgerhof (DE); BOHN, Heribert, D-67319 Wattenheim (DE); HEGER, Robert, D-69124 Heidelberg (DE); SCHLÖSSER, Ulrike, D-67433 Neustadt (DE); SIEMENSMEYER, Karl, D-67227 Frankenthal (DE)
(74) Vertreter: Kinzebach, Werner, Dr.
(86) Internationale Anmeldenummer: EP9907229
(87) Internationale Veröffentlichungsnummer: WO00018846

(56) Entgegenhaltungen:
- EP-A- 0 303 803
- DE-A- 19 738 145
- US-A- 4 665 107
- US-A- 4 692 188
- US-A- 5 679 724

## Beschreibung

Die vorliegende Erfindung betrifft ein Verfahren zur Herstellung von farbstoffhaltigen Polymerpartikeln die in einer Matrix eines im Wesentlichen wasserunlöslichen Polymers mindestens einen Farbstoff enthalten.

Pigmente und Dispersionsfarbstoffe sind die wichtigsten Vertreter der Gruppe der wasserunlöslichen Farbstoffe. Häufig ist es erforderlich, bei Dispersionsfarbstoffen sogar unumgänglich, sie in kolloid-disperser Form zur Anwendung zu bringen. Besonders wichtig ist die kolloid-disperse Verteilung, wenn die Farbstoffe beim Ink-Jet-Druck, einem weitverbreiteten Verfahren, zum kontaktlosen Bedrucken von verschiedenen Printmedien, wie beispielsweise Papier, Transparentfolien, Fotopapieren und Textilien, zur Anwendung kommen. Auch zur Einfärbung von Kunststoffen und polymeren Werkstoffen ist die feinteilige kolloid-disperse Verteilung der farbstoffhaltigen Polymerpartikel notwendig, um eine optimale Farbstärke bei hoher Lichtechtheit zu erzielen. Um eine kolloid-disperse Verteilung zu erreichen, werden die Farbstoffkristalle in der Regel mechanisch zerkleinert, beispielsweise durch Mahlen, siehe z.B. EP 716 134 A. Ein entscheidender Nachteil des Vermahlens besteht darin, daß Metallabrieb oder Abrieb der Mahlkörper in das Farbstoffpulver gelangt, der bei der Anwendung des Farbstoffpulvers zu großen Problemen führen kann. Beispielsweise kann es zur Beschädigung oder Verstopfung der Düsen beim Ink-Jet-Druck kommen.

Pigmente und Dispersionsfarbstoffe in kolloid-disperser Form müssen gegen Rekristallisation, Agglomeration und Flockung stabilisiert werden. Eine Möglichkeit hierzu schlägt die US 5,531,816 vor. Sie beschreibt eine Ink-Jet-Tintenzubereitung auf Wasserbasis, die wenigstens ein deagglomeriertes Pigment mit einer Teilchengröße im Bereich von 5 nm bis 1 µm, wenigstens eine wasserunlösliche organische Verbindung und wenigstens eine amphiphile Verbindung enthält. Die wasserunlösliche organische Verbindung ist dabei mit Hilfe der amphiphilen Verbindung in Form kleiner Tröpfchen in der Wasserphase solubilisiert. Das Pigment ist in den Tröpfchen der wasserunlöslichen organischen Verbindung dispergiert und wird auf diese Weise in deagglomerisiertem Zustand gehalten.

Die DE 27 32 500 A beschreibt ein Verfahren zur Herstellung von wasser-dispergierbaren, pulverförmigen Dispersionsfarbstoffe durch Sprühtrocknung einer Lösung der Farbstoffe in Ameisensäure, Formamid, N-Methylformamid, Butyrolacton oder Ethylenglykol. Die Lösung kann außerdem Dispergiermittel, Tenside und Schutzkolloide enthalten. Das erhaltene Farbstoffpulver besteht aus Teilchen im Nanopartikelbereich.

Den Farbstoffteilchen gemäß Stand der Technik ist gemeinsam, daß sie eine relativ breite Teilchengrößenverteilung aufweisen und daher die Brillanz der Farbe nicht optimal ist.

Die DE 198 15 129 beschreibt präzipitierte, wasserunlösliche oder schwer wasserlösliche Farbstoffe in kolloid-disperser Form mit einer mittleren Teilchengröße im Bereich von 5 nm bis 5 µm und mit einer Breite der Teilchengrößenverteilung von weniger als 50 %. Die Farbstoffteilchen werden hergestellt, indem sie aus einer Lösung des Farbstoffes in einem mit Wasser mischbaren organischen Lösungsmittel durch Zugabe einer Wasserphase gefällt werden. Alternativ werden die Farbstoffteilchen hergestellt, indem aus einer Lösung des Farbstoffes in einem mit Wasser nicht mischbaren organischen Lösungsmittel eine Öl-in-Wasser-Emulsion hergestellt wird und die Farbstoffteilchen durch Abziehen des Lösungsmittels gefällt werden.

In der US 5,344,489 bzw. 5,318,628 und der US 5,406,314 sind Pigmentpartikel beschrieben, die in Ink-Jet-Tinten oder Anstrichmitteln verwendet werden können. Sie sind aufgebaut aus einem anorganischen Kern aus z. B. Siliciumdioxid, der mit einer Farbstoffschicht und gegebenenfalls einer weiteren Schicht zur Modifizierung der Eigenschaften umhüllt ist. Zur Anwendung werden diese Pigmentpartikel in einem Träger aus einem thermoplastischen Polymer dispergiert. Die Herstellung der Pigmentpartikel ist aufwendig und es besteht die Gefahr, dass die Düsen beim Ink-Jet-Verfahren auf Grund der anorganischen Kernpartikel verstopfen.

Die WO 98/10023 beschreibt Polymerisatdispersionen, bei denen die Polymerteilchen einen Farbstoff nahezu vollständig in der Polymerphase gelöst oder dispergiert enthalten. Zur Herstellung der Polymerisatdispersionen wird der Farbstoff in die feste Polymerphase, beispielsweise durch Extrusion oder Verkneten, eingearbeitet. Die erhaltene Polymermasse wird dann durch Behandlung in einem Emulgierautomaten oder einem Extruder in eine Dispersion überführt. Die Partikel in der erhaltenen Dispersion besitzen eine Größe im µm-Bereich und eine breite Teilchengrößenverteilung. Sie sind daher, wie in der WO 98/10023 offenbart, für den Korrosionsschutz metallischer Oberflächen, nicht aber zum Bedrucken von Printmedien oder von Textilien brauchbar.

Die US 4,692,188 beschreibt ein Verfahren zur Herstellung von Tintenzubereitungen für den Inkjet-Druck. Die farbstoffhaltigen Polymerpartikel mit einem Teilchendurchmesser von etwa 30 nm bis 2 µm werden erhalten, indem man eine Lösung eines Polymers und eines Farbstoffs in einem mit Wasser nicht mischbaren organischen Lösungsmittel löst, eine tensidhaltige wäßrige Phase hinzufügt, das Gemisch emulgiert und anschließend das organische Lösungsmittel verdampft.

Der vorliegenden Erfindung liegt daher die Aufgabe zu Grunde, wasserunlösliche Farbstoffe mit geringer Teilchengröße und enger Teilchengrößenverteilung zur Verfügung zu stellen, die zum Bedrucken von Printmedien brauchbar und einfach herstellbar sind.

Überraschenderweise wurde nun gefunden, dass diese Aufgabe gelöst wird mit einem Verfahren zur Herstellung von farbstoffhaltigen Polymerpartikeln durch Fällen aus. einer Lösung, die in einem mit Wasser mischbaren organischen Lösungsmittel den Farbstoff und ein wasserunlösliches Polymer enthält.

Gegenstand der vorliegenden Erfindung ist daher ein Verfahren zur Herstellung von farbstoffhaltigen Polymerpartikeln, die in einer Matrix eines im Wesentlichen wasserunlöslichen Polymers mindestens einen Farbstoff enthalten und eine mittlere Teilchengröße im Bereich von 5 nm bis 5 µm aufweisen, dadurch gekennzeichnet, dass man die Polymerpartikel aus einer Lösung des Polymers und des Farbstoffs in einem mit Wasser mischbaren organischen Lösungsmittel durch Zugabe einer wässrigen Phase fällt.

Vorzugsweise ist der Farbstoff molekulardispers in dem Polymer verteilt, er kann jedoch auch molekular aggregiert oder mikrokristallin vorliegen. Die Polymermatrix ist vorzugsweise amorph, kann aber auch kristalline oder mikrokristalline Bereiche enthalten.

Vorzugsweise liegt die mittlere Teilchengröße im Bereich von 50 nm bis 300 nm, insbesondere 50 nm bis 250 nm. Die Breite der Teilchengrößenverteilung ist vorzugsweise ≤ 35 %.

Als Farbstoff verwendet man vorzugsweise wasserunlösliche oder schwer wasserlösliche Azo-, Anthrachinon-, Chinophthalon-, Methin- und Azamethinfarbstoffe oder insbesondere einen Dispersionsfarbstoff aus der folgenden Colour Index Liste:
C. I. Disperse Yellow 1, 2, 3, 4, 5, 6, 7, 8, 9, 10, 11, 11:1, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119. 120, 121, 126, 149, 179, 180, 181, 182, 183, 184, 184:1, 185, 198, 200, 201, 202, 203, 204, 205, 206, 207, 208, 209, 210, 211, 212, 213, 214, 215, 216, 217, 218, 219, 220, 221, 222, 223, 224, 225, 226, 227, 228, 241.
C. I. Disperse Orange 1, 2, 3, 3:3, 4, 5, 6, 7, 8, 9, 10, 11, 12, 13, 14, 15, 16, 17, 18,19, 20, 21, 22, 23, 24, 25, 25:1, 26, 27, 28, 29, 30, 31, 32, 33, 34, 35, 36, 37, 38, 39, 40, 41, 41:1, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 126, 127, 128, 129, 130, 131, 136, 137, 138, 139, 140, 141, 142, 143, 145, 146, 147, 148.
C. I. Disperse Red 1, 2, 3, 4, 5, 5:1, 6, 7, 8, 9, 10, 11, 12, 13, 14, 15, 16, 17, 18, 19, 20, 21, 22, 23, 24, 25, 26, 27, 28, 29, 30, 30:1, 31, 32, 33, 34, 35, 36, 38, 39, 40, 41, 43, 43:1, 46, 48, 50, 51, 52, 53, 54, 55, 55:1, 56, 58, 59, 60, 61, 63, 65, 66, 69, 70, 72, 73, 74, 75, 76, 77, 79, 80, 81, 82, 84, 85, 86, 86: 1, 87, 88, 89, 90, 91, 92, 93, 94, 96, 97, 98, 100, 102, 103, 104, 105, 106, 107, 108, 109, 110, 111, 112, 113, 115, 116, 117, 118, 120, 121, 122, 123, 125, 126, 127, 128, 129, 130, 131, 132, 133, 134, 135, 136, 137, 138, 139, 140, 141, 142, 143, 144, 145, 146, 147, 148, 149, 150, 151, 151:1, 152, 153, 154, 155, 156, 157, 158, 159, 160, 161, 162, 163, 164, 165, 166, 167, 167:1, 168, 169, 170, 171, 172, 173, 174, 175, 176, 177, 178, 179, 180, 181, 182, 183, 184, 185, 186, 187, 188, 189, 190, 190:1, 191, 191:1, 192, 193, 194, 195, 205, 206, 207, 211, 223, 225, 229, 263, 273, 274, 275, 276, 277, 278, 279, 280, 281, 302:1, 305, 306, 307, 308, 309, 310, 311, 312, 313, 314, 315, 316, 317, 318, 319, 320, 321, 322, 323, 324, 325, 326, 327, 328 329, 330, 331, 332, 333, 334, 335, 336, 338, 339, 340, 341, 342, 343, 344, 346, 347, 348, 349, 352, 356, 359, 364, 366, 367, 369, 371.
C. I. Disperse Violet 1, 2, 3, 4, 4:1, 5, 6, 7, 8, 9, 10, 11, 12, 13, 14, 15, 16, 17, 18, 19, 20, 21, 22, 23, 24, 25, 26, 27, 28, 29, 31, 33, 34, 35, 36, 37, 38, 39, 40, 41, 42, 43, 44, 45, 46, 47, 48, 49, 50, 51, 52, 53, 54, 55, 56, 57, 58, 59, 60, 81, 86, 87, 88, 89, 91, 92, 93, 94, 95, 96, 97, 98.
C. I. Disperse Blue 1, 1:1, 2, 3, 3:1, 4, 5, 6, 7, 7:1, 8, 9, 10, 11, 12, 13, 13:1, 14, 15, 16, 17, 18, 19, 20, 21, 22, 23, 23:1, 24, 25, 26, 27, 28, 29, 30, 31, 32, 33, 34, 35, 36, 38, 39, 40, 42, 43, 44, 45, 47, 48, 49, 51, 52, 53, 54, 55, 56, 58, 60, 60:1, 61, 62, 63, 64, 64:1, 65, 66, 68, 70, 72, 73, 75, 76, 77, 79, 80, 81, 81:1, 82, 83, 84, 85, 86, 87, 88, 89, 90, 91, 92, 93, 94, 95, 96, 97, 98, 99, 100, 101, 102, 103, 104, 105, 106, 107, 108, 109, 111, 112, 113, 114, 115, 116, 117, 118, 119, 121, 122, 123, 124, 125, 126, 127, 128, 130, 131, 132, 133, 134, 136, 137, 138, 139, 140, 141, 142, 143, 144, 145, 146, 147, 148, 149, 150, 151, 152, 153, 154, 155, 156, 158, 159, 160, 161, 162, 163, 164, 165, 165:2, 166, 167, 168, 169, 170, 171, 172, 173, 174, 175, 183, 186, 195, 197, 205, 214, 281, 282, 283, 283:1, 284, 285, 286, 287, 288, 289, 290, 291, 292, 293, 294, 316, 317, 318, 319, 320, 321, 322, 323, 324, 325, 326, 327, 328, 329, 330, 331, 332, 333, 334, 335, 336, 337, 338, 339, 340, 341, 342, 343, 344, 345, 346, 347, 349, 352, 356, 359, 366, 369, 371.
C. I. Disperse Green 1, 2, 5, 6, 9.
C. I. Disperse Brown 1, 2, 3, 4, 4:1, 5, 7, 8, 9, 10, 11, 16, 18, 19, 20, 21.
C. I. Disperse Black 1, 3, 4, 5, 6, 7, 8, 9, 10, 11, 12, 13, 14, 15, 20, 22, 24, 25, 26, 27, 28, 29, 29:1, 30, 31, 32, 33, 34, 36.
oder einen Solventfarbstoff aus der folgenden Colour Index Liste:
C. I. Solvent Yellow 2, 3, 7, 12, 13, 14, 16, 18, 19, 21, 25, 25:1, 27, 28, 29, 30, 33, 34, 36, 42, 43, 44, 47, 56, 62, 72, 73, 77, 79, 81, 82, 83, 83:1, 88, 89, 90, 93, 94, 96, 98, 104, 107, 114, 116, 117, 124, 130, 131, 133, 135, 141, 143, 145, 145, 146, 157, 160:1, 161, 162, 163, 167, 169, 172, 174, 175, 176, 179, 180, 181, 182, 183, 184, 185, 186, 187, 189, 190, 191.
C. I. Solvent Orange 1, 2, 3, 4, 5, 7, 11, 14, 20, 23, 25, 31A, 40:1, 41, 45, 54, 56, 58, 60, 62, 63, 70, 75, 77, 80, 81, 86, 99, 102, 103, 105, 106, 107, 108, 109, 110, 111, 112, 113.
C. I. Solvent Red 1, 2, 3, 4, 8, 16, 17, 18, 19, 23, 24, 25, 26, 27, 30, 33, 35, 41, 43, 45, 48, 49, 52, 68, 69, 72, 73, 83:1, 84:1, 89, 90, 90:1, 91, 92, 106, 109, 111, 118, 119, 122, 124, 125, 127, 130, 132, 135, 141, 143, 145, 146, 149, 150, 151, 155, 160, 161, 164, 164:1, 165, 166, 168, 169, 172, 175, 179, 180, 181, 182, 195, 196, 197, 198, 207, 208, 210, 212, 214, 215, 218, 222, 223, 225, 227, 229, 230, 233, 234, 235, 236, 238, 239, 240, 241, 242, 243, 244, 245, 247, 248.
C. I. Solvent Violet 2, 8, 9, 11, 13, 14, 21, 21:1, 26, 31, 36, 37, 38, 45, 46, 47, 48, 49, 50, 51, 55, 56, 57, 58, 59, 60, 61.
C. I. Solvent Blue 2, 3, 4, 5, 7, 18, 25, 26, 35, 36, 37, 38, 43, 44, 45, 48, 51, 58, 59, 59:1, 63, 64, 67, 68, 69, 70, 78, 79, 83, 94, 97, 98, 99, 100, 101, 102, 104, 105, 111, 112, 122, 124, 128, 129, 132, 136, 137, 138, 139, 143.
C. I. Solvent Green 1, 3, 4, 5, 7, 28, 29, 32, 33, 34, 35.
C. I. Solvent Brown 1, 3, 4, 5, 12, 20, 22, 28, 38, 41, 42, 43, 44, 52, 53, 59, 60, 61, 62, 63.
C. I. Solvent Black 3, 5, 5:2, 7, 13, 22, 22:1, 26, 27, 28, 29, 34, 35, 43, 45, 46, 48, 49, 50.
oder einen der folgenden Dispersionsfarbstoffe:

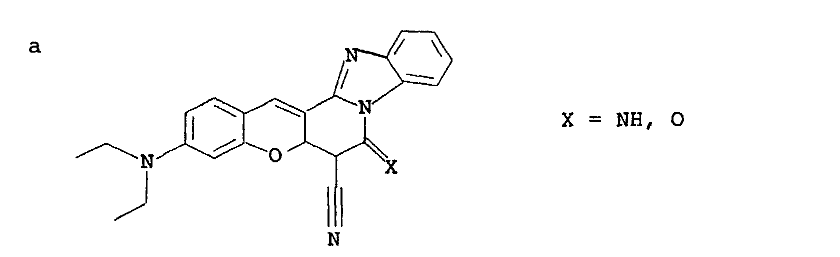

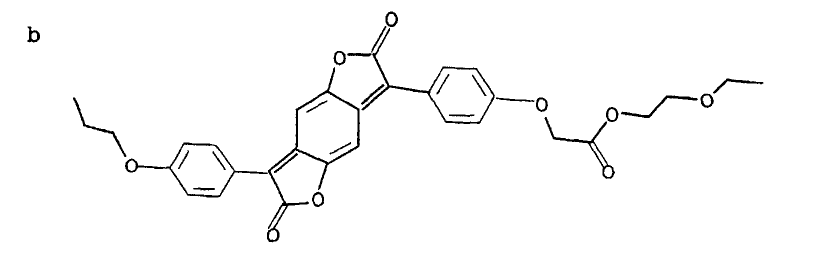

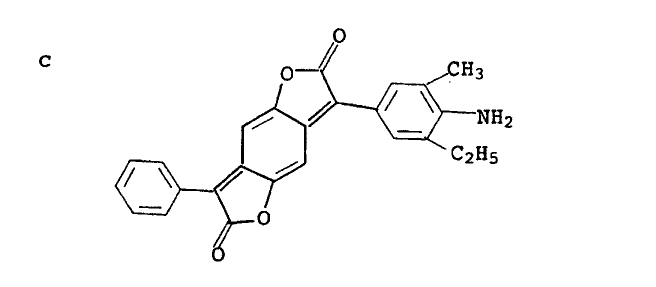

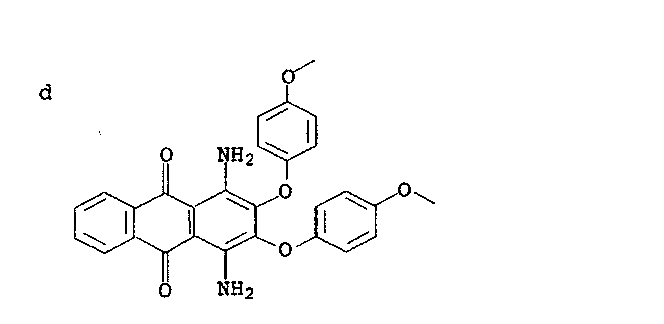

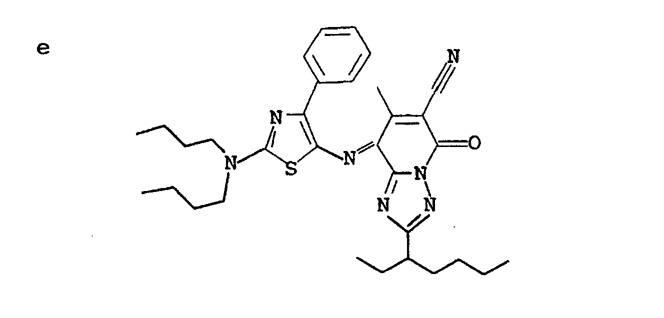

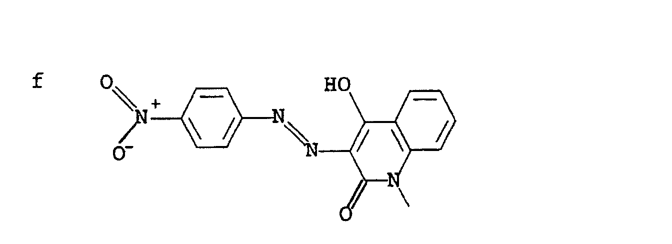

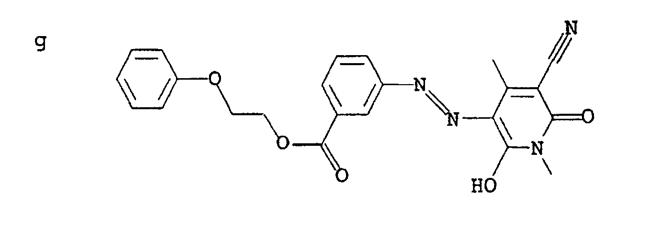

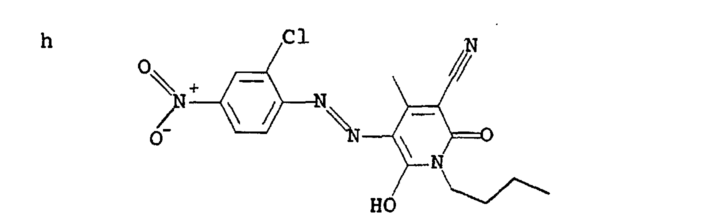

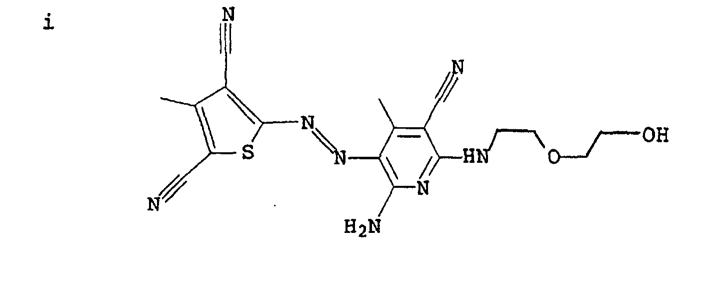

Als Polymer ist jedes wasserunlösliche oder schwach wasserlösliche, in wassermischbaren organischen Lösungsmitteln aber lösliche Polymer geeignet, so dass es aus einer Lösung in dem organischen Lösungsmittel zusammen mit dem Farbstoff, wie unten noch näher erläutert, gefällt werden kann. Im Allgemeinen wird man Polymere verwenden, deren Wasserlöslichkeit geringer als 5 g/l ist, um die Verluste an Polymer möglichst gering zu halten und deren Löslichkeit in einem mit Wasser mischbaren organischen Lösungsmittel mindestens 10 g/l beträgt, um die Flüssigkeitsvolumina gering zu halten.

Geeignete Polymere sind solche, die durch radikalische, anionische und kationische Polymerisation ethylenisch ungesättigter Gruppen erhältlich sind. Brauchbare Polymere sind aber auch Additions-, Ringöffnungs- und Kondensationspolymere, wie Polyester, Polyether und Polyurethane.

Vorzugsweise verwendet man Polymere, die durch radikalische Polymerisation erhalten wurden und die wenigstens ein Monomer a, gegebenenfalls wenigstens ein Monomer b mit polaren Gruppen und gegebenenfalls ein weiteres vom Monomer a verschiedenes Monomer c einpolymerisiert enthalten.

Die Monomere a sind vorzugsweise ausgewählt unter
i) Estern von α,β-ethylenisch ungesättigten C₃-C₈-Monocarbonsäuren und C₄-C₈-Dicarbonsäuren mit C₁-C₁₂-Alkanolen, insbesondere C₁-C₈-Alkanolen. Beispiele für diese Mono- und Dicarbonsäuren sind Acrylsäure, Methacrylsäure, Crotonsäure, Maleinsäure, Fumarsäure, Itaconsäure und Citraconsäure, wobei Acrylsäure und Methacrylsäure bevorzugt sind. Beispiele für C₁-C₁₂-Alkanole sind Methanol, Ethanol, n-Propanol, i-Propanol, n-Butanol, i-Butanol, sec-Butanol, t-Butanol, 2-Ethylhexanol, n-Octanol und n-Dodecanol. Bevorzugte Ester sind Methylmethacrylat, n-Butylacrylat und 2-Ethylhexylacrylat;
ii) Vinylestern von C₁-C₁₂-Monocarbonsäuren, insbesondere C₁-C₈-Monocarbonsäuren. Beispiele für Vinylester sind Vinylacetat, Vinylpropionat, Vinylbutyrat, Vinylhexanoat und Vinyldecanoat;
iii)vinylaromatischen Verbindungen, wie Styrol und α-Methylstyrol;
iv) C₂-C₆-Olefinen, wie Ethylen, Propen, 1-Buten, 2-Buten und Isobuten.

Monomere mit polaren Gruppen sind anionische Monomere b1, kationische Monomere b2 und nichtionische Monomere b3.

Anionische Monomere b1 sind vorzugsweise ausgewählt unter
i) α,β-ethylenisch ungesättigten C₃-C₈-Monocarbonsäuren und C₄-C₈-Dicarbonsäuren und den Halbestern mit C₁-C₁₂-Alkanolen und den Anhydriden davon. Beispiele für diese Carbonsäuren sind oben als Säurekomponente der Ester a i) angegeben. Acrylsäure und Methacrylsäure sind bevorzugt;
ii) aromatischen Vinylcarbonsäuren, wie 2-, 3- oder 4-Vinylbenzoesäure;
iii)monoethylenisch ungesättigten Sulfon- und Phosphonsäuren, wie Vinylsulfonsäure, Allylsulfonsäure, Vinylbenzolsulfonsäure, Vinylphosphonsäure.

Besonders bevorzugte Monomere b1 sind Acrylsäure, Methacrylsäure und Vinylsulfonsäure.

Bei den Monomeren b2 handelt es sich um ethylenisch ungesättigte, stickstoffbasische Verbidungen. Bevorzugt sind Ester der oben beschriebenen α,β-ethylenisch ungesättigten C₃-C₈-Monocarbonsäuren mit Amino-C₂-C₈-alkanolen, Mono-C₁-C₄-alkylamino-C₂-C₈-alkanolen oder Di-C₁-C₄-alkylamino-C₂-C₈-alkanolen, N-Vinylimidazolen und 2-, 3- oder 4-Vinylpyridinen und die durch Alkylierung mit Alkylhalogeniden, Dialkylsulfaten und Alkylenoxiden erhaltenen quaternären Formen davon.

Bevorzugte Monomere b3 sind N-Vinyllactame, insbesondere N-Vinylpyrrolidon, Ester α,β-ethylenisch ungesättigter C₃-C₈-Monocarbonsäuren mit C₂-C₈-Alkandiolen und die ethoxylierten oder propoxylierten Derivate davon.

Die Monomere c sind vorzugsweise ausgewählt unter copolymerisierbaren Monomeren c1 und vernetzenden Monomeren c2. Brauchbare Monomere c1 sind vorzugsweise Amide, Mono-C₁-C₄-alkylamide und Di-C₁-C₄-alkylamide der oben aufgeführten α,β-ethylenisch ungesättigten C₃-C₈-Monocarbonsäuren, vorzugsweise Acrylamid und Methacrylamid, Acrylnitril, Methacrylnitril; Butadien und Vinylether von C₁-C₈-Alkanolen, insbesondere Vinylethylether.

Bei den vernetzenden Monomeren c2 handelt es sich um polyfunktionelle Monomere, die zwei oder mehrere nicht-konjugierte, ethylenisch ungesättigte Bindungen aufweisen oder die neben der ethylenisch ungesättigten Bindung eine Alkoxy-, Hydroxy- oder n-Alkylolgruppe enthalten. Beispiele hierfür sind die Diester zweiwertiger Alkohole mit den oben genannten ethylenisch ungesättigten Monocarbonsäuren, die Vinyl- und Allylester der ethylenisch ungesättigten Carbonsäuren oder Diviynlaromaten, insbesondere Ethylenglykoldiacrylat, 1,4-Butylenglykoldiacrylat, Propylenglykoldiacrylat, Vinylmethacrylat, Allylacrylat und Divinylbenzol. Beispiele für polyfunktionelle Monomere c2 sind die N-Hydroxyalkylund N-Alkylolamide der genannten ethylenisch ungesättigten Carbonsäuren sowie Glycidylacrylat und Glycidylmethacrylat. Die so erhaltenen Polymere können durch nachfolgende polymeranaloge Reaktionen (Hydrolyse, Veresterung, Quaternisierung, Sulfonisierung) bezüglich ihrer Polarität gezielt modifiziert werden. Das Molekulargewicht der Polymere liegt zwischen 10³ und 10⁷ g/mol, bevorzugt zwischen 10³ und 10⁶ g/mol, besonders bevorzugt zwischen 10³ und 10⁵ g/mol.

Besonders bevorzugte Polymere sind solche, die
mindestens einen Ester der Acrylsäure oder Methacrylsäure mit einem C₁-C₄-Alkanol, insbesondere Methylmethacrylat und gegebenenfalls Acrylsäure oder Methacrylsäure; oder
Styrol und gegebenenfalls Acrylsäure oder Methacrylsäure; oder
Ethylen oder Propylen und gegebenenfalls Acrylsäure oder Methacrylsäure;
einpolymerisiert enthalten.
Vorzugsweise enthalten die Polymere, jeweils bezogen auf das Gesamtgewicht des Polymers, 30 bis 100 Gew.-%, vorzugsweise 40 bis 100 Gew.-%, des Monomers a; 0 bis 60 Gew.-% bzw. 0,1 bis 60 Gew.-% und vorzugsweise 1 bis 55 Gew.-% des Monomers b; und 0 bis 30 Gew.-% bzw. 0,1 bis 30 Gew.-% und vorzugsweise 1 bis 20 Gew.-% des Monomers c, wobei sich die Mengen zu 100 Gew.-% addieren.

Das Mengenverhältnis von Farbstoff zu Polymer liegt im Allgemeinen im Bereich von 5:1 bis 1:10 Gew.-Teilen, vorzugsweise 1:2 bis 1:5 Gew.-Teilen.

Zur Herstellung der erfindungsgemäßen Partikel werden die grobkristallinen Farbstoffteilchen und das Polymer zunächst in einem geeigneten mit Wasser mischbaren organischen Lösungsmittel gelöst. Welches Lösungsmittel verwendet wird, richtet sich nach den Löslichkeitseigenschaften des Farbstoffes und des Polymers. Im Prinzip sind alle mit Wasser mischbaren (dazu zählen auch solche Lösungsmittel, die mit Wasser nur teilweise, d.h. mindestens zu etwa 10 Gew.-%, mischbar sind) organischen Lösungsmittel brauchbar. Im allgemeinen verwendet man solche Lösungsmittel, die thermisch stabil sind. Geeignete Lösungsmittel sind:
1. Mono- und Polyalkohole wie Methanol, Ethanol, n-Propanol, Isopropanol, Glykol, Glyzerin, Propylenglykol, Polyethylenglykole etc.;
2. Ether, wie Tetrahydrofuran, Dioxan, 1,2-Propandiol-1-n-propylether, 1,2-Butandiol-1-methylether, Ethylenglykolmonomethylether, Diethylenglykolmonomethylether etc.;
3. Ester wie Essigsäuremethylester, Essigsäureethylester, Essigsäurebutylester, Monoester von Ethylenglykol oder Propylenglykolen mit Essigsäure, Butyrolacton etc.;
4. Ketone, wie Aceton oder Methylethylketon;
5. Amide, wie Formamid, Dimethylformamid, Dimethylacetamid, N-Methylpyrrolidon und Hexamethylphosphorsäuretriamid ;
6. Sulfoxide und Sulfone, wie Dimethylsulfoxid und Sulfolan;
7. Alkancarbonsäuren, wie Ameisensäure oder Essigsäure.

Bevorzugt sind die oben unter 1 bis 6 aufgeführten Lösungsmittel, insbesondere Methanol, Ethanol, n-Propanol, Isopropanol, Tetrahydrofuran (THF), Dioxan, 1,2-Butandiol-1-methylether, 1,2-Propandiol-1-n-propylether, Dimethylacetamid, N-Methylpyrrolidon oder Aceton.

Die Menge an Lösungsmittel richtet sich nach dem zu lösenden Farbstoff und Polymer. Im allgemeinen wird man bestrebt sein, möglichst wenig Lösungsmittel einzusetzen.

Das Lösen der Komponenten erfolgt im Allgemeinen bei erhöhter Temperatur, da bei Raumtemperatur oder darunter die Löslichkeit zu gering ist. Vorzugsweise arbeitet man bei 50 bis 300°C, insbesondere 100 bis 300°C. Falls der Siedepunkt des Lösungsmittels zu gering ist, kann das Lösen auch unter Druck erfolgen, beispielsweise bei einem Druck von bis zu 50 bar.

Das Ausfällen der Polymer-Farbstoffpartikel in kolloid-disperser Form erfolgt dann durch Zugabe einer Wasserphase (Wasser oder ein Gemisch aus Wasser mit bis zu 30 Gew.-% eines mit Wasser mischbaren organischen Lösungsmittels) zu der Lösung des Farbstoffes und des Polymers in dem mit Wasser mischbaren organischen Lösungsmittel. Die Temperatur, bei welcher der Fällungsvorgang erfolgt, ist nicht kritisch. Zweckmäßigerweise gibt man Wasser von einer Temperatur im Bereich von 0 bis 50°C zu der heißen Lösung.

Vorzugsweise enthalten entweder die Lösung oder die Wasserphase oder beide Phasen wenigstens ein Schutzkolloid, um zu verhindern, daß die kolloid-dispersen Partikel wieder agglomerieren. Als Schutzkolloide kommen die zu diesem Zweck üblicherweise verwendeten natürlichen oder synthetischen Polymere zur Anwendung. Brauchbare natürliche oder halbsynthetische Schutzkolloide sind beispielsweise Gelatine, Fischgelatine, Stärke oder Stärkederivate, wie Dextrine, Pektin, Gummi arabicum, Casein, Caseinat, Alginate, Cellulose und Cellulosederivate, wie Methylcellulose, Carboxymethylcellulose, Hydroxypropylcellulose oder Hydroxypropylmethylcellulose.

Brauchbare synthetische Schutzkolloide sind wasserlösliche Homooder Copolymere, wobei es sich um Neutralpolymere, kationische Polymere und anionische Polymere handeln kann. Auch Komplexe aus polykationischen und polyanionischen Polymeren sowie Coazervate kommen in Betracht.

Die Schutzkolloid-Polymere sind aufgebaut aus Monomeren mit hydrophilen Gruppen und gegebenenfalls Comonomeren mit hydrophoben Gruppen, wobei das Verhältnis zwischen hydrophilen und hydrophoben Gruppen so gewählt ist, daß das Copolymer wasserlöslich ist.

Geeignete hydrophile Monomere sind beispielsweise N-Vinyllactame, wie N-Vinylpyrrolidon; Acrylamid oder Methacrylamid und deren N-C₁-C₄-Mono- oder N,N-Di-C₁-C₄-alkylderivate; Acrylsäure oder Methacrylsäure; Monomere mit einem primären, sekundären oder tertiären basischen Stickstoffatom, wie Amino-C₂-C₄-alkylacrylate und -methacrylate, z.B. Dimethylaminoethyl(meth)acrylat, und die mit C₁-C₄-Alkylierungsmitteln quaternisierten Derivate davon; ethylenisch ungesättigte Sulfonsäuren, wie Vinylsulfonsäure, Acrylamido-N-propansulfonsäure und Styrolsulfonsäure; Hydroxy-C₂-C₄-alkylacrylate und -methacrylate; Allylalkohol und Methallylalkohol; olefinisch ungesättigte Verbindungen mit Epoxygruppen, wie Glycidylacrylat und Glycidylmethacrylat; Monoester und Diester von ethylenisch ungesättigten C₄-C₈-Dicarbonsäuren, wie Maleinsäure und Itaconsäure, mit Aminoalkohlen, wie Dimethylaminoethanol; und Amide oder Imide dieser Carbonsäuren mit Diaminen, wie Dimethylaminoproplyamin.

Geeignete Comonomere mit hydrophoben Gruppen sind beispielsweise C₂-C₄-Alkylvinylether, wie Ethylvinylether; Vinylester von C₂-C₈-Carbonsäuren, wie Vinylacetat und Vinylpropionat; C₁-C₈-Alkylacrylate und -methacrylate, wie Methyl-, Ethyl-, n-Butyl und 2-Ethylhexylacrylat und -methacrylat; vinylaromatische Verbindungen wie Styrol; und 1-Olefine mit bis zu 20 Kohlenstoffatomen, wie Ethylen, Propylen und Isobutylen.

Als Schutzkolloid brauchbare Polymere sind insbesondere Polyvinylpyrrolidon, Polyacrylsäure oder Polymethacrylsäure und Copolymere davon mit einem Dicarbonsäureanhydrid einer ethylenisch ungesättigten C₄-C₈-Carbonsäure, wie Maleinsäureanhydrid oder Itaconsäureanhydrid; Polyvinylalkohol und teilverseiftes Polyvinylacetat; Polyacrylamid und Polymethacrylamid und deren teilverseifte Derivate; Polymere aus Monomeren mit einer primären, sekundären oder tertiären Aminogruppe und die N-C₁-C₄-Mono- und N,N-C₁-C₄-Dialkylderivate sowie die mit C₁-C₄-Alkylierungsmitteln quaternisierten Derivate davon; Polyethylenoxide und Polypropylenoxide sowie Blockcopolymere davon; Polyaminosäuren wie Polyasparaginsäure und Polylysin, sowie Kondensate aus Phenylsulfonsäure mit Harnstoff und Formaldehyd und Kondensate aus Naphthalinsulfonsäure mit Formaldehyd.

Die Menge an Schutzkolloid in der Wasserphase liegt im allgemeinen im Bereich von 1 bis 50 Gew.-%, vorzugsweise 5 bis 30 Gew.-%, bezogen auf das Gesamtgewicht der Wasserphase. Das Gewichtsverhältnis von Farbstoff und Polymer zu Schutzkolloid liegt im allgemeinen im Bereich von 2:1 bis 1:20. Die Menge an zugesetzter Wasserphase richtet sich nach dem Farbstoff, der Konzentration der Farbstofflösung und der Konzentration an Schutzkolloid in der Wasserphase. Im allgemeinen verwendet man die Farbstoff-Polymerlösung und die Wasserphase in einem Gewichtsverhältnis im Bereich von 1:2 bis 1:20.

Beim Fällen der Partikel kann man auch in solchen Fällen übliche Zusätze vorsehen, beispielsweise eines der nachfolgend noch erwähnten Tenside.

Zweckmäßigerweise erfolgt das Vermischen von Farbstoff-Polymerlösung und Wasserphase möglichst rasch. Geeignete Apparaturen hierfür sind dem Fachmann bekannt. Brauchbar sind beispielsweise Y-oder T-Mischer oder statische Mischer.

Das erfindungsgemäße Verfahren zur Herstellung der Farbstoffteilchen kann kontinuierlich oder diskontinuierlich durchgeführt werden. Vor oder während der weiteren Aufkonzentration kann eventuell weiteres Schutzkolloid zugegeben werden, um eine noch bessere kolloidale Stabilisierung und eine noch bessere Einbindung des Farbstoffs in die Polymermatrix zu erreichen.

Das erfindungsgemäße Verfahren zur Herstellung der Partikel kann kontinuierlich oder diskontinuierlich durchgeführt werden.

Die mit den erfindungsgemäßen Verfahren erhaltene kolloidale Polymer-Farbstofflösung kann direkt zu den gewünschten Färbemitteln verarbeitet werden. Alternativ kann man die Farbstofflösung aufkonzentrieren, indem man einen Teil der flüchtigen Bestandteile in üblicher Weise entfernt. Die flüchtigen Bestandteile können auch vollständig entfernt werden, beispielsweise durch Sprühtrocknung. Man erhält dabei die erfindungsgemäßen Farbstoffe in Form eines Trockenpulvers, das erneut in Wasser kolloidal gelöst werden kann.

Die nach dem erfindungsgemäßen Verfahren hergestellten farbstoffhaltigen Partikel können auch in Färbemitteln eingesetzt werden.

Die Menge an nach dem erfindungsgemäßen Verfahren hergestellten Partikeln im Färbemittel liegt im allgemeinen im Bereich von 0,1 bis, 30 Gew.-%, vorzugsweise 1 bis 15 Gew.-%.

Die nach dem Fällen erhaltene kolloidale Lösung der Partikel kann direkt als Färbemittel eingesetzt werden. Im allgemeinen werden jedoch für die Formulierung eines Färbemittels übliche Hilfs- und Zusatzstoffe zugegeben. Besonders bevorzugt werden die Farbstoffe bzw. die kolloidalen Farbstofflösungen zu Ink-Jet-Tintenzubereitungen verarbeitet, die in einem wäßrigen Medium erfindungsgemäße Partikel in kolloid-disperser Form enthalten.

Für die meisten Anwendungen ist der Zusatz von Tensiden zu dem Färbemittel erforderlich, die nach dem gewünschten Anwendungsgebiet gewählt werden. Dabei können die üblichen anionischen, kationischen oder nicht-ionischen Tenside zur Anwendung kommen.

Anionische Tenside sind beispielsweise Seifen, Alkansulfonate, Olefinsulfonate, Alkylarylsulfonate, Alkylnaphthalinsulfonate, Sulfosuccinate, Alkylsulfate und Alkylethersulfate, Alkylmethylestersulfonate, Acylglutamate, Sarkosinate und Taurate. Beispiele sind Natriumlaurylsulfat, Natriumlaurylethersulfat, Oleylsulfonat, Nonylbenzolsulfonat, Natriumdodecylbenzolsulfonat und Butylnaphthalinsulfonat.

Katonische Tenside sind beispielsweise Alkyltrimethylammonium-Halogenide/Alkylsulfate, Alkylpyridinium-Halogenide und Dialkyldimethylammonium-Halogenide/Alkylsulfate.

Geeignete nicht-ionische Tenside sind beispielsweise alkoxylierte tierische/pflanzliche Fette und Öle, z. B. Maisölethoxylate, Rizinusölethoxilate, Talgfettethoxilate; Glycerinester, z. B. Glycerinmonostearat; Fettalkoholalkoxylate und Oxoalkoholalkoxylate; Alkylphenolalkoxylate, z. B. Isononylphenolethoxylate; und Zukkertenside, z. B. Sorbitanfettsäureester (Sorbitanmonooleat, Sorbitantristearat), Polyoxyethylensorbitanfettsäureester.

Geeignet sind auch zwitterionische Tenside, wie Sulfobetaine, Carboxybetaine, Alkyldimethylaminoxide, z. B. Tetradecyldimethylamminoxid, und Polymertenside, wie Di-, Tri- und Multi-Blockpolymere vom Typ (AB)x-, ABA und BAB, z. B. Polyethylenoxid-blockpolypropylenoxid, Polystyrol-block-polyethylenoxid, und AB-Kammpolymere, z. B. Polymethacrylat-comb-polyethylenoxid.

Die Menge an Tensid, wenn vorhanden, liegt im allgemeinen im Bereich von 0,5 bis 25 Gew.-%, insbesondere 1 bis 15 Gew.-%, bezogen auf das Gesamtgewicht der Zubereitung.

Darüber hinaus kann die Zubereitung weitere Additive enthalten, wie Additive zur Viskositätseinstellung, beispielsweise wasserlösliche Stärke- und Cellulosederivate als Verdickungsmittel, Additive zur Verbesserung des Antrocknungsverhaltens, wie z. B. Isopropanol, Aceton, Diethylenglykol, Butyltriglykol; Biozide und Fungizide; Sequestriermittel, wie Ethylendiaminotetraessigsäure; und Pufferlösungen zur pH-Kontrolle.

Die nach dem erfindungsgemäßen Verfahren hergestellten Partikel bzw. Färbemittel sind brauchbar zum Bedrucken von Printmedien, insbesondere von Papier, Folien, Transparentfolien, Papieren zur Reproduktiondigitaler photographischer Aufnahmen und Graphiken, sowie zum Bedrucken von Textilien, vor allem solcher aus synthetischen Fasern. Bevorzugt zum Bedrucken der Textilien ist dabei der Transferdruck.

Die nach dem erfindungsgemäßen Verfahren hergestellten farbstoffhaltigen Polymerpartikel ergeben auf Grund ihrer engen Teilchengrößenverteilung insbesondere beim Papier- und Foto-Druck eine reinere Farbe und damit eine größere Brillanz. Darüber hinaus ergeben sie auch eine höhere Farbstärke.

Ferner zeigen die nach dem erfindungsgemäßen Verfahren hergestellten farbstoffhaltigen Polymerpartikel ein vorteilhaftes Viskositätsverhalten und sie lassen sich in einfacher Weise auf die Fasern aufbringen.

Außerdem ist es auf Grund der großen Breite der einsetzbaren Polymere möglich, die thermischen (Glasübergangstemperatur, Schmelzpunkt), mechanischen und optischen Eigenschaften (Brechungsindex) der Partikel dem jeweiligen Anwendungszweck optimal anzupassen. Zudem sind die Polymerpartikel einfach und kontinuierlich herstellbar.

Die nachfolgenden Beispiele erläutern die Erfindung, ohne sie zu begrenzen.

Bei dem El/1-Wert handelt es sich um die Extinktion im Absorptionsmaximum des Parbstoffes; Schichtdicke 1 cm; 1 gew.-%-ige Lösung des Farbstoffes in dem jeweiligen zum Lösen des Farbstoffes und des Polymers verwendeten Lösungsmittel.

### Beispiel 1

2,5 g eines blauen Azamethinfarbstoffes werden zusammen mit 7,5 g PMMA (Polymethacrylsäuremethylester) in 300 g Aceton bei Raumtemperatur unter Rühren gelöst.

Diese Lösung wird mit einer Förderrate von 6,3 kg/h kontinuierlich mit Wasser, dessen Förderrate 90,8 kg/h beträgt, in einem statischen Mischapparat (Mischdüse) vermischt. Dabei werden die Polymer-Farbstoffteilchen präzipitiert und man erhält eine stabile wässrige Dispersion. Durch Abziehen des Lösungsmittels und eines Teils des Wassers wird die Dispersion auf einen Farbstoffgehalt von 0,6 % aufkonzentriert. Sie weist dann einen E1/1-Wert von 54 auf. Die Teilchengröße beträgt 206 nm.

### Beispiel 2

2,5 g eines blauen Azamethinfarbstoffes werden zusammen mit 7,5 g PS (Polystyrol) in 300 g THF bei Raumtemperatur unter Rühren gelöst.

Diese Lösung wird mit einer Förderrate von 1,89 kg/h kontinuierlich mit Wasser, dessen Förderrate 90,3 kg/h beträgt, in einem statischen Mischapparat (Mischdüse) vermischt. Dabei werden die Polymer-Farbstoffteilchen präzipitiert und man erhält eine stabile wässrige Dispersion. Durch Abziehen des Lösungsmittels und eines Teils des Wassers wird die Dispersion auf einen Farbstoffgehalt von 1,04 % aufkonzentriert. Sie weist dann einen E1/1-Wert von 59 auf. Die Teilchengröße beträgt 168 nm.

### Beispiel 3

2,5 g eines blauen Azamethinfarbstoffes werden zusammen mit 7,5 g Primacor (Copolymerisat Ethylen/Acrylsäure 80/20) in 300 g THF bei Raumtemperatur unter Rühren gelöst.

Diese Lösung wird mit einer Förderrate von 6,66 kg/h kontinuierlich mit Wasser (pH 10,4 mittels NaOH), dessen Förderrate 92,6 kg/h beträgt, in einem statischen Mischapparat (Mischdüse) vermischt. Dabei werden die Polymer-Farbstoffteilchen präzipitiert und man erhält eine stabile wässrige Dispersion. Durch Abziehen des Lösungsmittels und eines Teils des Wassers wird die Dispersion auf einen Farbstoffgehalt von 1,80 % aufkonzentriert. Sie weist dann einen E1/1-Wert von 83 auf. Die Teilchengröße beträgt 280 nm.

### Beispiel 4

1,0 g eines gelben Azofarbstoffes werden zusammen mit 3,0 g Eudragit L (Copolymerisat Polymethylmethacrylat/Acrylsäure 1/1) in 200 g THF bei Raumtemperatur unter Rühren gelöst.

Diese Lösung wird mit einer Förderrate von 1,96 kg/h kontinuierlich mit Wasser, dessen Förderrate 90,0 kg/h beträgt, in einem statischen Mischapparat (Mischdüse) vermischt. Dabei werden die Polymer-Farbstoffteilchen präzipitiert und man erhält eine stabile wässrige Dispersion. Durch Abziehen des Lösungsmittels und eines Teils des Wassers wird die Dispersion auf einen Farbstoffgehalt von 0,48 % aufkonzentriert. Sie weist dann einen E1/1-Wert von 65 auf. Die Teilchengröße beträgt 241 nm.

### Beispiel 5

1,0 g eines gelben Azofarbstoffes werden zusammen mit 1,0 g Eudragit L und 2,0 g Lucryl G66 (Polymethylmethacrylat) in 200 g THF bei Raumtemperatur unter Rühren gelöst.

Diese Lösung wird mit einer Förderrate von 1,83 kg/h kontinuierlich mit Wasser, dessen Förderrate 90,6 kg/h beträgt, in einem statischen Mischapparat (Mischdüse) vermischt. Dabei werden die Polymer-Farbstoffteilchen präzipitiert und man erhält eine stabile wässrige Dispersion. Durch Abziehen des Lösungsmittels und eines Teils des Wassers wird die Dispersion auf einen Farbstoffgehalt von 0,59 % aufkonzentriert. Sie weist dann einen E1/1-Wert von 81 auf. Die Teilchengröße beträgt 165 nm.

### Beispiel 6

1,0 g eines magenta-farbenen Methinfarbstoffes werden zusammen mit 1,0 g Eudragit L und 2,0 Lucryl G66 in 200 g THF bei Raumtemperatur unter Rühren gelöst.

Diese Lösung wird mit einer Förderrate von 2,07 kg/h kontinuierlich mit Wasser, dessen Förderrate 90,7 kg/h beträgt, in einem statischen Mischapparat (Mischdüse) vermischt. Dabei werden die Polymer-Farbstoffteilchen präzipitiert und man erhält eine stabile wässrige Dispersion. Durch Abziehen des Lösungsmittels und eines Teils des Wassers wird die Dispersion auf einen Farbstoffgehalt von 2,04 % aufkonzentriert. Sie weist dann einen E1/1-Wert von 92 auf. Die Teilchengröße beträgt 205 nm.

### Beispiel 7

1,0 g eines magenta-farbenen Methinfarbstoffes werden zusammen mit 1,0 g Eudragit L und 2,0 g Lucryl G66 in 200 g THF bei Raumtemperatur unter Rühren gelöst.

Diese Lösung wird mit einer Förderrate von 2,06 kg/h kontinuierlich mit einer wässrigen Lösung von 0,1 % eines Copolymerisats Styrol/Acrylsäure/Dimethylaminoethylmethacrylat 40/20/40, dessen Förderrate 89,7 kg/h beträgt, in einem statischen Mischapparat (Mischdüse) vermischt. Dabei werden die Polymer-Farbstoffteilchen präzipitiert und man erhält eine stabile wässrige Dispersion. Durch Abziehen des Lösungsmittels und eines Teils des Wassers wird die Dispersion auf einen Farbstoffgehalt von 0,63 % aufkonzentriert. Sie weist dann einen E1/1-Wert von 84 auf. Die Teilchengröße beträgt 267 nm.

### Beispiel 8

10 g eines blauen Azamethinfarbstoffes werden zusammen mit 30 g Disperdur N4 (Copolymerisat aus Methylmethacrylat und Butylmethacrylat, das mit ca. 1 % primären Aminofunktionen funktionalisiert ist) in 500 g THF bei Raumtemperatur unter Rühren gelöst. Anschließend werden ca. 30 ml Essigsäure dazugegeben.

Diese Lösung wird mit einer Förderrate von 9,35 kg/h kontinuierlich mit Wasser, dessen Förderrate 90,6 kg/h beträgt, in einem statischen Mischapparat (Mischdüse) vermischt. Dabei werden die Polymer-Farbstoffteilchen präzipitiert und man erhält eine stabile wässrige Dispersion mit pH 3,5. Durch Abziehen des Lösungsmittels und eines Teils des Wassers wird die Dispersion auf einen Farbstoffgehalt von 5,99 % aufkonzentriert. Sie weist dann einen E1/1-Wert von 89 auf. Die Teilchengröße beträgt 176 nm mit einer Verteilungsbreite (Varianz) von 31,6 %.

## Patentansprüche

1. Verfahren zur Herstellung von farbstoffhaltigen Polymerpartikeln, die in einer Matrix eines im Wesentlichen wasserunlöslichen Polymers mindestens einen Farbstoff enthalten und eine mittlere Teilchengröße im Bereich von 5 nm bis 5 µm aufweisen, **dadurch gekennzeichnet, dass** man die Polymerpartikel aus einer Lösung des Polymers und des Farbstoffs in einem mit Wasser mischbaren organischen Lösungsmittel durch Zugabe einer wässrigen Phase fällt.

2. Verfahren nach Anspruch 1, **dadurch gekennzeichnet, dass** das Fällen der Polymerpartikel in Anwesenheit eines Schutzkolloides erfolgt.

3. Verfahren nach einem der vorhergehenden Ansprüche, wobei das Polymer, jeweils bezogen auf das Gesamtgewicht des Polymers, 30 bis 100 Gew.-% wenigstens eines Monomers a, 0 bis 60 Gew.-% wenigstens eines Monomers b mit polaren Gruppen und 0 bis 30 Gew.-% wenigstens eines weiteren, vom Monomer a verschiedenen Monomers c einpolymerisiert enthält.

4. Verfahren nach Anspruch 3, wobei das Monomer a ausgewählt ist unter Estern α,β-ethylenisch ungesättigter C₃-C₈-Monocarbonsäuren oder C₄-C₈-Dicarbonsäuren mit C₁-C₁₂-Alkanolen, Vinylestern von C₁-C₁₂-Monocarbonsäuren, vinylaromatischen Verbindungen und C₂-C₆-Olefinen.

5. Verfahren nach Anspruch 3 oder 4, wobei das Monomer b ausgewählt ist unter α,β-ethylenisch ungesättigten C₃-C₈-Monocarbonsäuren, α,β-ethylenisch ungesättigten C₄-C₈-Dicarbonsäuren, den Halbestern mit C₁-C₁₂-Alkanolen und Anhydriden davon, aromatischen Vinylcarbonsäuren, monoethylenisch ungesättigten Sulfon- und Phosphonsäuren, Estern α,β-ethylenisch ungesättigter C₃-C₈-Monocarbonsäuren mit Amino-C₂-C₈-alkanolen, Mono-C₁-C₄-alkylamino-C₂-C₈-alkanolen oder Di-C₁-C₄-alkylamino-C₂-C₈-alkanolen, N-Vinyllactamen, Estern α,β-ethylenisch ungesättigter C₃-C₈-Monocarbonsäuren mit C₂-C₈-Hydroxyalkoholen und den ethoxilierten oder propoxilierten Derivaten davon.

## Claims

1. A process for preparing dye-containing polymer particles containing at least one dye in a matrix of an essentially water-insoluble polymer and having an average particle size within the range from 5 nm to 5 µm, which comprises precipitating the polymer particles from a solution of the polymer and of the dye in a water-miscible organic solvent by addition of an aqueous phase.

2. A process as claimed in claim 1, wherein the precipitating of the polymer particles is effected in the presence of a protective colloid.

3. A process as claimed in any of the preceding claims, wherein the polymer contains (in each case based on the total weight of the polymer) from 30 to 100% by weight of at least one monomer a, from 0 to 60% by weight of at least one monomer b having polar groups and from 0 to 30% by weight of at least one further monomer c, different than monomer a, in polymerized form.

4. A process as claimed in claim 3, wherein the monomer a is selected from the group consisting of esters of α,β-ethylenically unsaturated C₃-C₈ monocarboxylic acids or C₄-C₈ dicarboxylic acids with C₁-C₁₂ alkanols, vinyl esters of C₁-C₁₂ monocarboxylic acids, aromatic vinyl compounds and C₂-C₆ olefins.

5. A process as claimed in claim 3 or 4, wherein the monomer b is selected from the group consisting of α,β-ethylenically unsaturated C₃-C₈ monocarboxylic acids, α,β-ethylenically unsaturated C₄-C₈ dicarboxylic acids, the monoesters with C₁-C₁₂ alkanols and anhydrides thereof, aromatic vinylcarboxylic acids, monoethylenically unsaturated sulfonic and phosphonic acids, esters of α,β-ethylenically unsaturated C₃-C₈ monocarboxylic acids with amino-C₂-C₈-alkanols, mono-C₁-C₄-alkylamino-C₂-C₈-alkanols or di-C₁-C₄-alkylamino-C₂-C₈-alkanols, N-vinyllactams, esters of α,β-ethylenically unsaturated C₃-C₈ monocarboxylic acids with C₂-C₈ hydroxyalcohols and the ethoxylated or propoxylated derivatives thereof.

## Revendications

1. Procédé de préparation de particules contenant des colorants, qui comprennent au moins un colorant dans la matrice d'un polymère qui est pour l'essentiel insoluble dans l'eau, et qui présentent une granulométrie moyenne dans la gamme de 5 nm à 5 µm, **caractérisé en ce que** l'on soumet à une précipitation les particules polymères à partir d'une solution du polymère et du colorant dans un solvant organique qui est miscible à l'eau, au moyen d'un ajout d'une phase aqueuse.

2. Procédé selon la revendication 1, **caractérisé en ce que** l'on procède à la précipitation des particules polymères en présence d'un colloïde protecteur.

3. Procédé selon l'une quelconque des revendications précédentes, **caractérisé en ce que** le polymère contient, à l'état polymérisé, au moins un monomère a à raison de 30% à 100% en poids, au moins un monomère b, présentant des groupes polaires, à raison de 0 à 60% en poids, et au moins un monomère supplémentaire c qui est différent du monomère a à raison de 0 à 30% en poids, à chaque fois par rapport au poids total du polymère.

4. Procédé selon la revendication 3, **caractérisé en ce que** l'on choisit le monomère a dans le groupe formé par les esters dérivés d'acides dicarboxyliques en C₄ à C₈ ou d'acides monocarboxyliques en C₃ à C₈ à insaturation éthylénique en position α,β et d'alcanols en C₁ à C₁₂, les esters vinyliques dérivés d'acides monocarboxyliques en C₁ à C₁₂, les composés vinylaromatiques et les oléfines en C₂ à C₆.

5. Procédé selon la revendication 3 ou 4, **caractérisé en ce que** l'on choisit le monomère b dans le groupe formé par les acides monocarboxyliques en C₃ à C₈ à insaturation éthylénique en position α,β, les acides dicarboxyliques en C₄ à C₈ à insaturation éthylénique en position α,β, les demi-esters dérivés d'alcanols en C₁ à C₁₂ et leurs anhydrides, les acides vinylcarboxyliques aromatiques, les acides phosphoniques et sulfoniques à insaturation monoéthyléniques, les esters dérivés d'acides monocarboxyliques en C₃ à C₈ à insaturation éthylénique en position α,β et d'amino-(alcanols en C₂ à C₈), de mono-(alkyle en C₁ à C₄)amino-(alcanols en C₂ à C₈) ou de di-(alkyle en C₁ à C₄)amino-(alcanols en C₂ à C₈), les N-vinyllactames, les esters dérivés d'acides monocarboxyliques en C₃ à C₈ à insaturation éthylénique en position α,β et d'hydroxyalcools en C₂ à C₈ et leurs dérivés éthoxylés ou propoxylés.
